# EUROPEAN PATENT SPECIFICATION

(11) **EP 2 008 907 B1**
(45) Date of publication and mention of the grant of the patent: **24.11.2010**
(21) Application number: 07111418.5
(22) Date of filing: 29.06.2007
(51) Int. Cl.: B62B 3/06, B66F 9/075, B66F 9/22

(54) **Integrated lift cylinder**
Integrierter Hubzylinder
Cylindre de levage intégré

(43) Date of publication of application: 31.12.2008
(73) Proprietor: BT Products AB, 595 81 Mjölby (SE)
(72) Inventor: Carlsson, Magnus, 590 47 Vikingsta (SE)
(74) Representative: Herbjørnsen, Rut

(56) References cited:
- EP-A- 0 209 502
- DD-A1- 43 406
- DE-A1- 19 522 456
- DE-U- 1 952 312
- GB-A- 988 600

## Description

### TECHNICAL FIELD

The present invention relates to a device and a method for fastening components of a vehicle. Specifically, the invention relates to mounting of components in an industrial truck.

### BACKGROUND OF THE INVENTION

Today, industrial trucks are used in lots of different areas. The manufacturing of industrial trucks is under constant development and different solutions to increase the production rate and reduce the manufacturing costs are constantly developed. In the industrial trucks of today the size as well as the manufacturing cost of the industrial trucks is essential to be as attractive as possible on the market and these parameters need to be reduced as much as possible. Generally, industrial trucks have their traction motor connected and secured to the gearbox resulting in that the motor rotate together with the gearbox. The assembly of the motor and gearbox is secured in place in the truck. In addition, typical industrial trucks of today comprise a lift mechanism, such as a hydraulic arrangement. The hydraulic arrangement mainly comprises a closed system comprising a reservoir, an electric motor, a pump, valve/s to lower the mechanism, and a lift cylinder connected to a lift arrangement, such as a fork lift arrangement or the like.

Furthermore, the existent general traction motor of the industrial trucks has a housing surrounding the motor components, such as the stator and coilings and more. The housing comprises an upper gable and a lower gable. The lower gable is secured to the frame structure of the truck. The gear arrangement is also attached to the frame of the truck. It should be noted that the assembly of motor and gearbox is mounted with a bearing arrangement to the frame part in order to be able to rotate in relation to the frame structure. However, industrial trucks still need to have a reduced manufacturing costs and the size/weight of components needs to be reduced.

DE-A-19522456 discloses a prior art fastening device with an integrated cylindrical body part which forms a lift cylinder.

### SUMMARY OF THE INVENTION

The invention relates to a fastening device according to claim 1 or claim 7.

The invention relates to a fastening device for mounting a traction motor and/or a gear arrangement to a frame structure of an industrial truck with a lift mechanism, wherein the fastening device is arranged to secure the traction motor and/or the gear arrangement to the frame structure of the industrial truck, wherein the fastening device has an integrated cylindrical body part forming a lift cylinder of a hydraulic system of the lift mechanism arranged to accommodate a lift piston.

In an embodiment the fastening device is provided with an opening extending inwardly into the fastening element forming the lift cylinder.

The fastening device may comprise a plate part arranged with openings to secure the motor and/or the gear arrangement to the plate part.

In an embodiment, the fastening device comprises a vertical part extending in a first direction arranged with fastening means to secure the vertical part to the frame structure of the industrial truck and that the plate part is arranged substantially perpendicular to the direction of the extending vertical part.

The fastening device may further be arranged with a supply opening that extends from one side of the vertical part into the extended opening accommodating the lift piston providing a channel for fluid of the hydraulic system.

In an embodiment the fastening device comprises an opening provided in the plate part arranged to accommodate motor components of the traction motor and thereby function as a lower housing to the traction motor.

The invention further relates to a fastening device for mounting a traction motor and a gear arrangement to a frame structure of an industrial truck wherein the fastening device is arranged to secure the traction motor and the gear arrangement of the industrial truck to the frame structure of the industrial truck, wherein the fastening device is arranged to function as a lower housing of the motor accommodating motor components, such as stator and coiling, of the traction motor.

Additionally may the fastening device comprise a plate part comprising an opening enabling a connection between the traction motor and the gear arrangement, and the plate part is further arranged with securing openings arranged to secure the traction motor to the plate part.

In an embodiment the opening in the plate part is machined to accommodate motor components, such as stator and coiling, of the traction motor.

The fastening device may comprise a vertical part arranged to provide securing arrangements for fastening the fastening device to the frame structure of the industrial truck.

Furthermore, the fastening device may have an integrated cylindrical body part arranged to function as a lift cylinder of a hydraulic system of the industrial truck, wherein the cylindrical body part is formed by an opening arranged at an end of the fastening device extending into the fastening device.

The invention further discloses an arrangement comprising a gear arrangement, a motor, and a fastening element according to the above.

In an embodiment of the arrangement, the traction motor may comprise an upper housing with fastening means arranged to secure the upper housing to the fastening device.

In an embodiment of the arrangement, the gear arrangement may comprise a bearing arrangement wherein a top part of the bearing arrangement is secured to the fastening device.

The invention further discloses an industrial truck comprising a lifting unit and a drive unit, wherein the drive unit comprises a frame structure, an arrangement according to the above and a hydraulic system connected to the fastening device of the arrangement arranged to control the operation of the lifting unit.

By integrating a lift cylinder with the fastening means of the assembly of the motor and the gear arrangement the needed space and the amount of material is reduced.

By integrating the lower motor housing with the fastening means the machining time, assembling time, amount of material, and the number of components are reduced. These reductions result in a reduction of manufacturing costs as well as a more compact installation which may be advantageously used in smaller industrial trucks with low fixation of the tiller arm.

### BRIEF DESCRIPTION OF THE DRAWINGS

The invention, together with further objectives and advantages thereof, may best be understood by reference to the following description taken in conjunction with the accompanying drawings in which:
Figure 1 shows a perspective view of an embodiment of a fastening element,
Figure 2 shows a schematic top view of a fastening element,
Figure 3 shows a perspective view of an embodiment of an arrangement,
Figure 4 shows a side view of an arrangement with a number of manoeuvring details added,
Figure 5 shows a schematic overview of an embodiment of a section of a fastening element, and
Figure 6 shows a schematic overview of a hydraulic system.

### DETAILED DESCRIPTION OF EMBODIMENTS OF THE INVENTION

An industrial truck mainly comprises a lifting unit, for example, a fork lift arrangement, and a drive unit. The drive unit contains devices, such as a motor, a gear box, traction/steering wheel, hydraulic lift arrangement connected to the lifting unit and more. The drive unit further comprises a frame structure shielding and securing the different devices at their positions as well as carrying a housing surrounding the dif ferent devices. In the drive unit the traction motor is connected to the gear box of the industrial truck, forming an assembly. The assembly needs to be secured at its position. For this purpose a fastening element is provided. In order to make the fastening element as robust as possible and by the same time save space in the drive unit a lift cylinder of the hydraulic lift arrangement is integrated with the fastening element. In order to speed up the assembling time and reduce the size and amount of material needed in the truck the fastening element is arranged to function as a lower gable/housing of the traction motor.

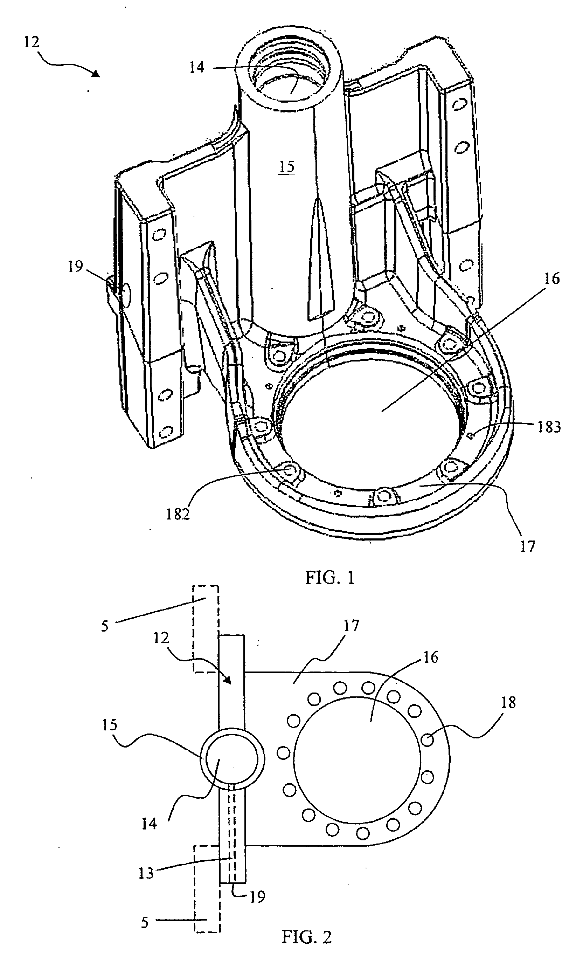

Figure 1 shows a perspective view of a fastening element 12. The fastening element 12 comprises a first vertical part and a horizontal plate part 17 substantially perpendicular to the vertical part. The plate part 17 is arranged with a number of fastening holes arranged to receiving fastening means of a traction motor and a gear arrangement. In the illustrated embodiment a number of fastening holes 183 is arranged to receive fastening means of the traction motor and a number of fastening holes 182 is arranged to receive fastening means of the gear arrangement. The plate part 17 is further provided with a circular opening 16 arranged to enable a motor shaft of the traction motor to connect to the gear arrangement. It should here be noted that in the illustrated embodiment the opening 16 is arranged with a shoulder at its circumferential inner face in order to accommodate the traction motor and function as a lower housing of a motor arrangement.

The vertical part is provided with an opening 14 at the top side extending downwardly along the vertical part forming a cylindrical body 15, a lift cylinder. A supply opening 19 extending towards and into the hollowness of the cylindrical body 15 is provided at a side face of the fastening element forming a supply channel for hydraulic fluid (see fig. 2) in the vertical part of the fastening element 12. In an embodiment a second supply opening may be provided at the other side.

In figure 2 a schematic top view of an embodiment of the fastening element 12 is shown. The fastening element 12 comprises the cylindrical hollowness forming a lift cylinder 15. A supply opening 19 is provided at one side extending towards and into the hollowness forming a supply channel 13 of hydraulic fluid in the fastening element 12. The fastening element 12 further comprises the protruding plate part 17 provided with a number of fastening openings/holes 18. The openings 18 are arranged to secure both the motor and the gear arrangement. The motor is connected to the gear arrangement through an opening 16 or the like arranged in the plate part 17. In the illustrated embodiment parts 5 of the frame structure of the drive unit of the industrial truck is shown as dashed line boxes. The fastening element 12 is fastened to this frame structure by fastening means, such as screws, bolts or the like.

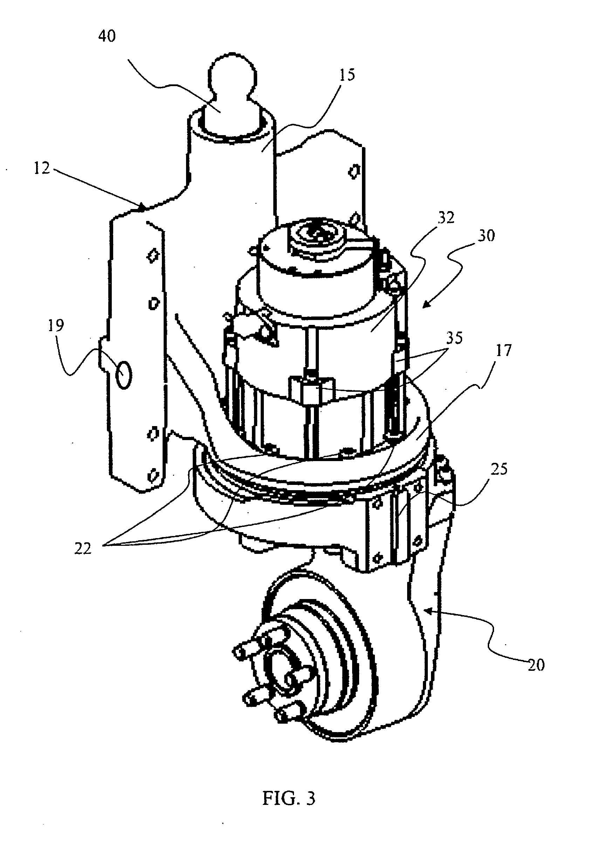

Figure 3 shows a schematic overview of an arrangement of an industrial truck. The arrangement comprises a fastening element 12 in accordance with the embodiment shown in figure 1. The fastening element comprises a vertical part and a horizontal plate part 17 substantially perpendicular to the vertical part of the fastening element 12. The vertical part is secured by fastening means, such as screws, bolt or the like, to the frame structure of the industrial truck (not shown). The arrangement further comprises a traction motor 30 and a gear arrangement 20. The traction motor and the gear arrangement are secured to the plate part 17 of the fastening element. The fastening element 12 is further arranged with an extended opening 14 forming a lift cylinder 15 accommodating a lift piston 40. The lift piston 40 is further connected to a fork or the like of the lift mechanism. The top of the piston may be formed as a ball to be able to raise the lift arrangement taking up forces from the lift arrangement. Pressure fluid of the hydraulic system is provided through an opening 19 led into the cylindrical hollowness to expose the lift piston 40 to the pressure of the pressurized fluid.

In an embodiment the gear arrangement 20 comprises among other things a bearing arrangement (not shown), such as a ball bearing or the like, arranged at the top of the gear arrangement 20, and a steering collar 25. One part, the upper part, of the bearing arrangement 20 is secured to the horizontal plate part 17 resulting in that the gear arrangement, excluded the upper part of the bearing arrangement, may rotate in relation to the horizontal part and the traction motor. The gear arrangement 20 is secured to the fastening element by fastening means 22, for example, screws, bolts or the like. By providing an arrangement wherein solely the gear arrangement rotates with the tiller arm, the wires and the like, attached to the motor, are not moving back and forth reducing the wear on the wires as well as the risk of getting caught and damaged.

In an embodiment the traction motor 30 comprises an upper housing structure 32 accommodating stator and coiling of the motor 30, the upper housing structure 32 comprises furthermore a number of fastening means 35, such as screws, bolts or the like, arranged to extend along the components of the motor 30 and to be secured to the plate part 17 of the fastening element 12. It should be noted that in the illustrated embodiment the plate part 17 comprises a surrounding ring protruding from the plate part extending perpendicular to the plate part strengthening the plate part 17.

By omitting a lower housing structure of the motor the assembling of the industrial truck is facilitated and the material used in the truck is reduced resulting in that the fastening element may be made thicker and stronger in structure providing a more rigid and solid fastening element.

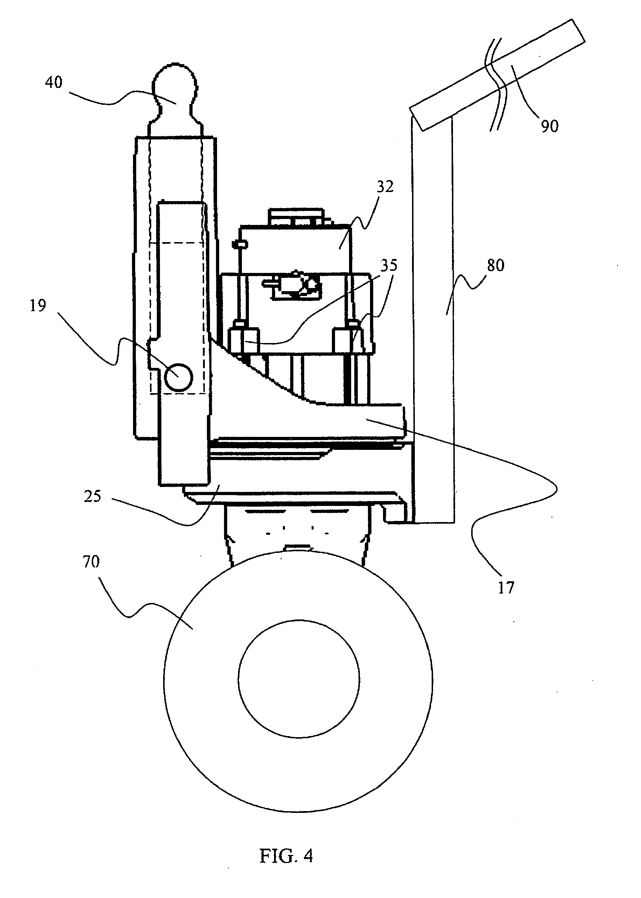

Figure 4 shows a schematic side view of the arrangement of figure 3 arranged in connection with a number of manoeuvre details. The fluid opening 19 in the fastening element provides a connection from the hydraulic system to the hollowness arranged in the fastening element. The collar 25 of the gear arrangement 20 is connected to a tiller arm 90 via an intermediate connection part 80, resulting in that a traction wheel 70 of the industrial truck is turned by moving the tiller arm 90. It should be noted that the embodiment wherein the plate part 17 has a circular form enables the intermediate connection part 80 to rotate a distance as long as possible, merely limited by the structural strength of the part connecting the vertical part to the plate part, increasing the manoeuvrability of the tiller arm and consequently the truck.

The embodiment of using the fastening element 12 with an integrated lift cylinder provides an arrangement that is compact and saves space within the industrial truck. Furthermore, the arrangement also results in that the fastening element is strengthened and the material consumption may be optimized. The vertical part of the fastening element 12 is provided with holes or the like arranged to form securing arrangements with suitable screws, bolts or the like. The securing arrangements should be able to take up shearing strains between the fastening element and frame structure of the truck. The integrated cylinder 15 of the fastening element strengthens the fastening element taking up lateral forces. The arrangement is advantageously used in trucks arranged with a lifting arrangement with a rather small lifting range, such as trucks with a second low lifting cylinder, in order to keep the fastening element in a suitable size.

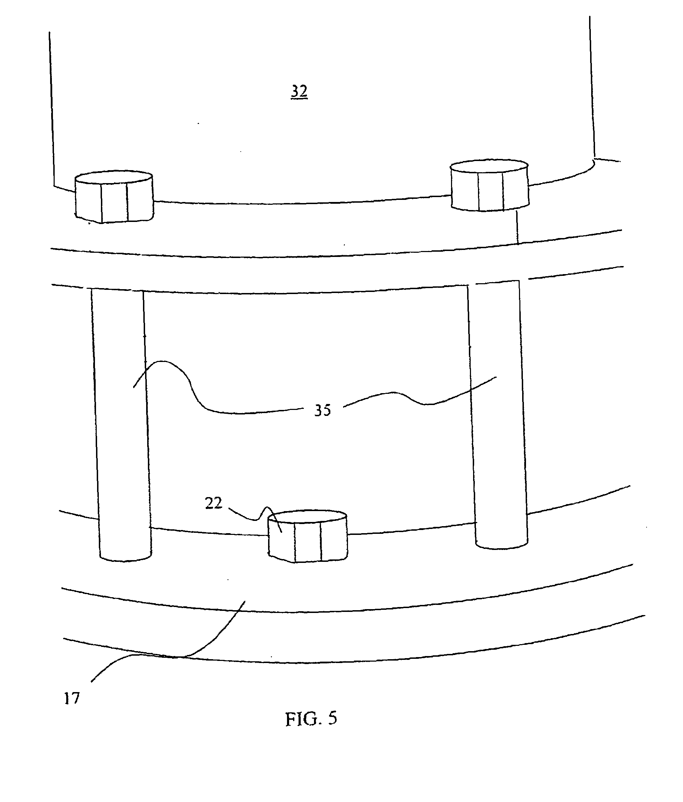

Figure 5 shows an enlarged schematic overview of the fastening arrangement of securing the traction motor and the gear arrangement to the plate part 17 of the fastening element 12. The upper housing structure 32 of the motor is fastened to the plate part 17 by using fastening means 35, such as screws, resulting in that the plate part 17 functions as a lower housing structure of the motor accommodating the motor components. In figure 5 also the heads of fastening means 22 arranged to secure the gear arrangement (not shown) to said plate part 17 of the fastening element 12 is shown.

By using this embodiment the number of details used in the assembling process is reduced (the lower housing of the motor) and thereby can the assembling time be reduced as well as the cost of the industrial truck. When assembling the truck one would generally mount and secure the gear arrangement to the plate part 17 at first using the fastening means 22, and then the motor would be secured to the plate part 17 by using the fastening means 35.

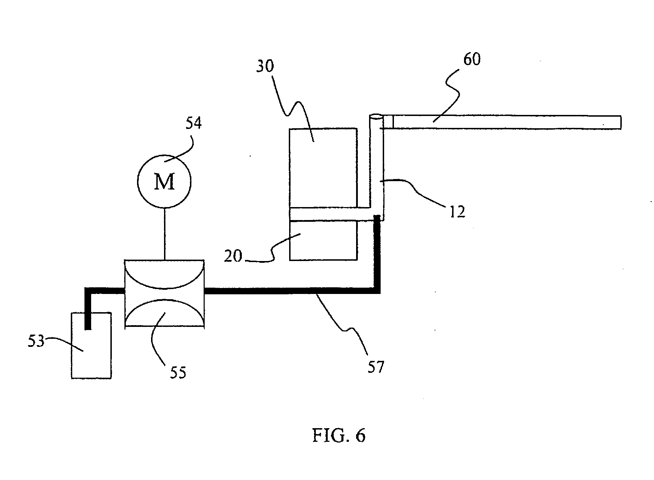

A schematic overview of a hydraulic system of an industrial truck is shown in figure 6. The hydraulic system comprises a retainer 53 containing a fluid for the system. A pump 55 is driven by a motor 54 and feeds fluid along the supply line 57 to the fastening element 12. The fluid of the supply line 57 is fed into the opening 19 (see figures 1-2) to the hollowness arranged in the fastening element 12 forming a cylindrical space for a lift piston. Connected to the lift piston is a lifting arrangement 60, such as a fork or the like. As illustrated a traction motor 30 and a gear arrangement 20 is arranged to the same fastening element 12.

## Claims

1. A fastening device (12) for mounting a traction motor (30) and/or a gear arrangement (20) to a frame structure of an industrial truck with a lift mechanism, wherein the fastening device (12) is arranged to secure the traction motor (30) and/or the gear arrangement (20) to the frame structure of the industrial truck wherein the fastening device (12) has an integrated cylindrical body part (15) forming a lift cylinder of a hydraulic system of the lift mechanism arranged to accommodate a lift piston, and wherein the integrated cylindrical body part (15) is formed by an opening (14) arranged at an end of the fastening device (12) extending into the fastening device (12) **characterised in that** the fastening device (12) is arranged to function as a lower housing of the traction motor (30) accommodating motor components, such as stator and coiling, of the traction motor (30).

2. A fastening device according to claim 1, wherein the fastening device (12) comprises a vertical part arranged to provide securing arrangements for fastening the fastening device (12) to the frame structure of the industrial truck.

3. A fastening device according to claim 2, wherein a plate part (17) is arranged substantially perpendicular to the direction of the extending vertical part.

4. A fastening device according to claim 3, wherein the plate part (17) comprises an opening (16) enabling a connection between the traction motor (30) and the gear arrangement (20).

5. A fastening device according to any one of claims 3 or 4, wherein the opening (16) is machined to accommodate motor components, such as stator and coiling, of the traction motor.

6. A fastening device according to any one of claims 3 to 5, wherein the plate part (17) is arranged with openings (18, 182, 183) to secure the motor (30) and/or the gear arrangement (20) to the plate part (17).

7. A fastening device according to any one of the preceding claims, wherein the fastening device (12) is further arranged with a supply opening (19) that extends from one side of the vertical part into the extended opening (14) accommodating the lift piston (40) providing a channel (13) for fluid of the hydraulic system.

8. An arrangement comprising a gear arrangement (20), a motor (30), and a fastening device (12) according to any of claims 1-7.

9. An arrangement according to claim 8, wherein the traction motor (30) comprises an upper housing (32) with fastening means arranged to secure the upper housing to the fastening device (12).

10. An arrangement according to any of claims 8-9, wherein the gear arrangement (20) comprises a bearing arrangement wherein a top part of the bearing arrangement is secured to the fastening device (12).

11. An industrial truck comprising a lifting unit and a drive unit, wherein the drive unit comprises a frame structure, an arrangement according to any of claims 8-10 and a hydraulic system connected to the fastening device (12) of the arrangement arranged to control the operation of the lifting unit.

## Patentansprüche

1. Befestigungsvorrichtung (12) zum Anbringen eines Fahrmotors (30) und/oder einer Getriebeanordnung (20) an einer Rahmenkonstruktion eines Flurförderfahrzeugs mit einem Hebemechanismus, wobei die Befestigungsvorrichtung (12) angeordnet ist, um den Fahrmotor (30) und/oder die Getriebeanordnung (20) an der Rahmenkonstruktion des Flurförderfahrzeugs zu sichern, wobei die Befestigungsvorrichtung (12) einen integrierten zylindrischen Körperabschnitt (15) aufweist, der einen Hebezylinder eines hydraulischen Systems des Hebemechanismus zur Aufnahme eines Hebekolbens bildet, und wobei der integrierte zylindrische Körperabschnitt (15) durch eine Öffnung (14) gebildet wird, die an einem Ende der Befestigungsvorrichtung (12) angeordnet ist und sich in die Befestigungsvorrichtung erstreckt, **dadurch gekennzeichnet, dass** die Befestigungsvorrichtung (12) angeordnet ist, um als ein unteres Gehäuse des Fahrmotors (30) zu wirken zur Aufnahme von Motorkomponenten des Fahrmotors (30), wie Stator und Spule.

2. Befestigungsvorrichtung nach Anspruch 1, wobei die Befestigungsvorrichtung (12) einen vertikalen Abschnitt umfasst, angeordnet, um Sicherungsanordnungen zum Befestigen der Befestigungsvorrichtung (12) an der Rahmenkonstruktion des Flurförderfahrzeugs bereitzustellen.

3. Befestigungsvorrichtung nach Anspruch 2, wobei ein Plattenabschnitt (17) im Wesentlichen senkrecht zur Richtung des sich erstreckenden vertikalen Abschnitts angeordnet ist.

4. Befestigungsvorrichtung nach Anspruch 3, wobei der Plattenabschnitt (17) eine Öffnung (16) umfasst, die eine Verbindung des Fahrmotors (30) und der Getriebeanordnung (20) ermöglicht.

5. Befestigungsvorrichtung nach einem der Ansprüche 3 oder 4, wobei die Öffnung (16) eingebracht ist, zur Aufnahme von Motorkomponenenten des Fahrmotors, wie Stator und Spule.

6. Befestigungsvorrichtung nach einem der Ansprüche 3 bis 5, wobei in dem Plattenabschnitt (17) Öffnungen (18, 182, 183) angeordnet sind, um den Motor (30) und/oder die Getriebeanordnung (20) an dem Plattenabschnitt (17) zu sichern.

7. Befestigungsvorrichtung nach einem der vorhergehenden Ansprüche, wobei in der Befestigungsvorrichtung (12) des Weiteren eine Versorgungsöffnung (19) angeordnet ist, die sich von einer Seite des vertikalen Abschnitts in die erweiterte Öffnung (14) erstreckt zur Aufnahme des Hebezylinders (40), der einen Kanal (13) für Fluid des hydraulischen Systems bereitstellt.

8. Anordnung, umfassend eine Getriebeanordnung (20), einen Motor (30) und eine Befestigungsvorrichtung (12) nach einem der Ansprüche 1-7.

9. Anordnung nach Anspruch 8, wobei der Fahrmotor (30) ein oberes Gehäuse (32) mit Befestigungsmitteln umfasst, die angeordnet sind, um das obere Gehäuse an der Befestigungsvorrichtung (12) zu sichern.

10. Anordnung nach einem der Ansprüche 8 bis 9, wobei die Getriebeanordnung (20) eine Lageranordnung umfasst, wobei der obere Teil der Lageranordnung an der Befestigungsvorrichtung gesichert ist.

11. Flurförderfahrzeug, umfassend eine Hebeeinheit und eine Antriebseinheit, wobei die Antriebseinheit eine Rahmenkonstruktion, ein Anordnung nach einem der Ansprüche 8 bis 10 und ein hydraulisches System umfasst, das mit der Befestigungsvorrichtung (12) der Anordnung verbunden ist, angeordnet zur Steuerung des Betriebs der Hebeeinheit.

## Revendications

1. Dispositif de fixation (12) pour le montage d'un moteur de traction (30) et/ou d'un agencement d'engrenages (20) à une structure de châssis d'un chariot de manutention avec un mécanisme de levage, lequel dispositif de fixation (12) est agencé de manière à fixer le moteur de traction (30) et/ou l'agencement d'engrenages (20) à la structure de châssis du chariot de manutention, lequel dispositif de fixation (12) possède une partie de corps cylindrique d'un seul tenant (15) formant un cylindre de levage d'un système hydraulique du mécanisme de levage agencé pour recevoir un piston de levage, et où la partie de corps cylindrique d'un seul tenant (15) est formée par une ouverture (14) agencée à une extrémité du dispositif de fixation (12) s'étendant dans le dispositif de fixation (12) **caractérisé en ce que** le dispositif de fixation (12) est agencé pour fonctionner en tant qu'un logement inférieur du moteur de traction (30) recevant des composants de moteur, tels qu'un stator et un enroulement, du moteur de traction (30).

2. Dispositif de fixation selon la revendication 1, lequel dispositif de fixation (12) comprend une partie verticale agencée de manière à fournir des agencements de fixation pour fixer le dispositif de fixation (12) à la structure de châssis du chariot de manutention.

3. Dispositif de fixation selon la revendication 2, où une partie de plaque (17) est agencée de manière sensiblement perpendiculaire à la direction de la partie d'extension verticale.

4. Dispositif de fixation selon la revendication 3, où la partie de plaque (17) comprend une ouverture (16) permettant un raccord entre le moteur de traction (30) et l'agencement d'engrenages (20).

5. Dispositif de fixation selon l'une quelconque des revendications 3 ou 4, où l'ouverture (16) est usinée de manière à recevoir des composants de moteur, tels qu'un stator et un enroulement, du moteur de traction.

6. Dispositif de fixation selon l'une quelconque des revendications 3 à 5, où la partie de plaque (17) est munie d'ouvertures (18, 182, 183) pour fixer le moteur (30) et/ou l'agencement d'engrenages (20) à la partie de plaque (17).

7. Dispositif de fixation selon l'une quelconque des revendications précédentes, lequel dispositif de fixation (12) est en outre munie d'une ouverture d'alimentation (19) qui s'étend à partir d'un côté de la partie verticale dans l'ouverture étendue (14) recevant le piston de levage (40) en fournissant un canal (13) pour un fluide du système hydraulique.

8. Agencement comprenant un agencement d'engrenages (20), un moteur (30), et un dispositif de fixation (12) selon l'une quelconque des revendications 1 à 7.

9. Agencement selon la revendication 8, où le moteur de traction (30) comprend un boîtier supérieur (32) avec des moyens de fixation agencés pour fixer le boîtier supérieur au dispositif de fixation (12).

10. Agencement selon l'une quelconque des revendications 8 à 9, où l'agencement d'engrenages (20) comprend un agencement de palier où une partie supérieure de l'agencement de palier est fixée au dispositif de fixation (12).

11. Chariot de manutention comprenant une unité de levage et une unité d'entraînement, où l'unité d'entraînement comprend une structure de châssis, un agencement selon l'une quelconque des revendications 8 à 10 et un système hydraulique relié au dispositif de fixation (12) de l'agencement, agencé de manière à commander le fonctionnement de l'unité de levage.
